# EUROPÄISCHE PATENTSCHRIFT

(11) **EP 3 059 206 B1**
(45) Veröffentlichungstag und Bekanntmachung des Hinweises auf die Patenterteilung: **09.08.2017**
(21) Anmeldenummer: 15020025.1
(22) Anmeldetag: 20.02.2015
(51) Int. Cl.: C01B 3/04

(54) **Verfahren zur Herstellung eines Brennstoffs in Form einer brennbaren, wasserstoffhaltigen Gasmischung durch Ammoniakspaltung**
METHOD FOR THE MANUFACTURE OF A FUEL IN THE FORM OF A COMBUSTIBLE, HYDROGEN-CONTAINING GAS MIXTURE BY MEANS OF AMMONIA CRACKING
PROCÉDÉ DE PRODUCTION D'UN COMBUSTIBLE SOUS FORME D'UN MÉLANGE DE GAZ INFLAMMABLE CONTENANT DE L'HYDROGÈNE PAR CRAQUAGE D'AMMONIAC

(43) Veröffentlichungstag der Anmeldung: 24.08.2016
(73) Patentinhaber: Wannemacher, Gerhard, 64390 Erzhausen (DE)
(72) Erfinder: Wannemacher, Gerhard, 64390 Erzhausen (DE)
(74) Vertreter: Leithe, Eva

(56) Entgegenhaltungen:
- WO-A1-2011/107279
- DE-A1- 2 617 089
- US-A- 3 198 604
- US-A1- 2012 148 925

## Beschreibung

### Gebiet der Erfindung

Die vorliegende Erfindung betrifft ein Verfahren zur Umwandlung von Ammoniak durch partielle Oxidation und Spaltung in ein brennbares, wasserstoffhaltiges Gasgemisch mit den Hauptkomponenten Wasserstoff, Wasserdampf und Stickstoff. Damit wird der in der Praxis kaum als Brennstoff nutzbare Ammoniak in ein leicht brennbares Gas überführt.

### Hintergrund der Erfindung

Ammoniak eignet sich wegen seines Energieinhaltes prinzipiell als Brennstoff, während einige Nachteile dieser Verwendung entgegenstehen. Dazu gehört z.B. die sehr geringe Flammengeschwindigkeit von Ammoniak-Luft-Gemischen, enge Zündgrenzen und hohe Zündenergie. Wegen dieser Nachteile findet Ammoniak in der Praxis als Brennstoff so gut wie keine Verwendung.

Vorteile sind neben der ausreichenden Energiedichte die Speicherbarkeit in flüssiger Form und der daraus resultierende kostengünstige Transport sowie die kohlendioxidfreie Verbrennung.

Ammoniak wird bisher überwiegend auf Erdgasbasis hergestellt, wobei Letzteres als Wasserstoffquelle dient. Eine weitere Möglichkeit zur Herstellung von Wasserstoff besteht in der Elektrolyse von Wasser, wobei anstelle von Erdgas elektrische Energie eingesetzt wird. Wegen der höheren Kosten findet dieses Verfahren bisher kaum Anwendung. Im Zuge der zunehmenden Verbilligung erneuerbarer Energiequellen, wie Solarenergie, Wind und Wasserkraft, rückt die Rentabilität dieses Herstellungsverfahrens näher. Weiterhin ist in Zukunft mit der Verknappung von Erdgas und den damit verbundenen höheren Preisrisiken zu rechnen. Bei der Herstellungsmethode über die Wasserelektrolyse wird zur Herstellung von Ammoniak letztendlich nur Luft, Wasser und elektrische Energie benötigt, so dass bei Einsatz von erneuerbaren elektrischen Energiequellen die Herstellung und Verwendung von Ammoniak kohlendioxid-neutral bleibt und kein Beitrag zur Klimaerwärmung geleistet wird. Weiterhin bestehen praktisch keine Limitierungen hinsichtlich der Verfügbarkeit der Ausgangsstoffe, sofern genügend erneuerbare Energien zur Verfügung gestellt werden können.

Zur Vermeidung der Nachteile bei der Verwendung von Ammoniak als Brennstoff kann dieser entsprechend dem hier vorgeschlagenen Verfahren durch partielle Oxidation und Spaltung in ein Gasgemisch bestehend aus Wasserstoff, Stickstoff und Wasserdampf umgewandelt werden. Dieses Gemisch kann direkt oder auch in aufbereiteter Form, z. B. nach Abtrennung des Wassers oder auch des Stickstoffs, zu Heizzwecken verwendet oder auch als Brennstoff Wärmekraftmaschinen zugeführt werden. Bei dem Verfahren entstehen nur geringe Verluste, so dass der Hauptanteil des Energiegehaltes des Ammoniak im erzeugten Produktgasgemisch noch zur Verfügung steht.

### Zusammenfassung der Erfindung

Die Spaltungsreaktion von Ammoniak zu Wasserstoff und Stickstoff ist endotherm. Sie erfolgt üblicherweise mit Unterstützung durch einen Spaltkatalysator bei Temperaturen über 400 °C, meist über 600 °C. Wegen der Endothermie wird zur Aufrechterhaltung der Reaktion eine Energiezufuhr von außen benötigt. Diese Energie wird durch Verbrennung eines Teils des durch die Ammoniakspaltung hergestellten Wasserstoffs erzeugt. Wegen der im Vergleich zur Ammoniakspaltung bei der Wasserstoffverbrennung frei werdenden hohen Energiemengen wird nur ein kleiner Teil des durch die Spaltung erzeugten Wasserstoffs benötigt. Der dazu nicht benötigte Wasserstoff wird dem Verfahren entnommen und weiteren Verwendungen zugeführt. Der ebenfalls gebildete Stickstoff durchläuft als Inertgas den Prozess.

Diverse Verfahren zur Spaltung von Ammoniak und Gewinnung von Wasserstoff wurden bereits beschrieben (siehe z. B. US2003/0232224, US 2005/0037244 oder US 2013/0266506). Diese Verfahren haben jedoch den Nachteil, dass die für die Ammoniakspaltung benötigte Energie über Wärmetauscherflächen dem Ammoniakstrom zugeführt werden muss, was zu einer Vergrößerung des Spaltreaktors und höherem Materialaufwand führt, oder dass sofern die Energie durch eine Beimischung von Luft oder Sauerstoff unter teilweise Oxidation des Ammoniak bereitgestellt wird, wegen der erhöhten Zündtemperatur eine Vorheizung des Gasgemisches erforderlich wird. Auch in diesem Fall sind zusätzliche Wärmetauscherflächen erforderlich.

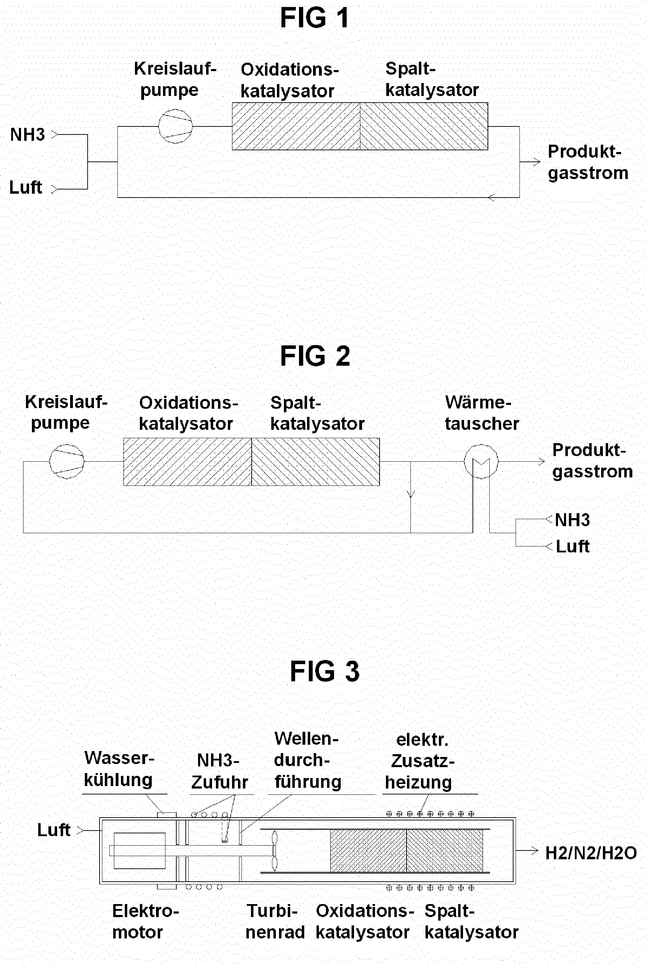

Im vorliegenden Fall wird ein Verfahren unter Anwendung eines Kreislaufreaktors beschrieben (s. FIG 1). Als Ausgangsstoffe werden Ammoniak und Luft eingespeist. Die Luftmenge wird soweit begrenzt, wie es für die Energiebereitstellung zur Ammoniakspaltung durch Oxidation erforderlich ist. Die Ammoniakumwandlung erfolgt dabei in einem zweigeteilten Katalysator. Der vordere Teil besteht aus einem üblichen Oxidationskatalysator (vorzugsweise Platin oder Palladium auf Aluminiumoxid oder anderen Trägermaterialien), der anschließende Teil aus einem üblichen Ammoniak-Spalt-Katalysator (z.B. Nickel oder Eisen auf geeigneten Trägermaterialien). Eine Kreislaufpumpe sorgt dafür, dass ein Teil des Gases vom Ausgang aus der Katalysatorfüllung wieder zum Reaktoreingang zurückgeführt wird. Das Kreislaufverhältnis, hier definiert als das Verhältnis des rückgeführten Gasstroms zum Eingangsgasstroms, kann über die Drehzahl der Pumpe eingestellt werden.

Die Prozessführung erfolgt derart, dass eine Mindesttemperatur am Ausgang des Spaltreaktors nicht unterschritten wird. Diese Temperatur ist von der Art des Spaltkatalysators abhängig und liegt so hoch, dass der Katalysator zuverlässig und mit hoher Reaktionsgeschwindigkeit arbeitet. Übliche Temperaturen für Nickel - oder Eisenkatalysatoren liegen z.B. bei über 700°C, bei Verwendung von Ruthenium können auch erheblich niedrigere Temperaturen ausreichend sein.

Am Ausgang des Spaltreaktors wird ein Gasstrom mit einem hohen Wasserstoffanteil entnommen. Ein Teil des Gasstroms wird an dem Reaktoreingang zurückgeführt und mit dem Frischgasstrom - bestehend aus Ammoniak und Luft - gemischt. Mit dem zugeführten Sauerstoff wird ein Teil des rückgeführten Wasserstoffs im Oxidationskatalysator in einer sehr schnellen Reaktion verbrannt, was zu einer entsprechenden Temperaturerhöhung der Gasmischung führt. Die Produktrückführung bewirkt, dass in erster Linie Wasserstoff und nicht Ammoniak in der Oxidationszone umgesetzt wird. Vorteilhaft ist hier die sehr niedrige Zündtemperatur und die hohe Reaktionsgeschwindigkeit des Wasserstoffs an edelmetallhaltigen Katalysatoren, wodurch die Vorwärmung der Ausgangsstoffe entfällt und das Reaktorvolumen klein gehalten werden kann. Weiterhin können innerhalb kürzester Reaktionszeit sehr hohe Endtemperaturen in der Gasmischung erhalten werden, da oberhalb von etwa 800 °C die Wasserstoffverbrennung nicht nur katalytisch sondern auch in der Gasphase erfolgt. Nach dem Eintritt in den Spaltkatalysator erfolgt die Ammoniakspaltung, wodurch die Temperatur der Gasmischung entsprechend der für die Spaltung erforderlichen Energie absinkt.

Das Kreislaufverhältnis ist derart einzuhalten, dass genügend Endprodukt zurückgeführt wird, um eine ausreichende Temperatur am Eingang des Oxidationskatalysators zu erhalten, damit der Oxidationskatalysator mit Sicherheit zündet. Weiterhin sollte eine gewisse Mindestmenge im Kreis geführt werden, damit nicht am Ende des Oxidationskatalysators unzulässig hohe Temperaturen erhalten werden, die den Katalysator evtl. beschädigen könnten.

Am Ende des Oxidationskatalysators wird die höchste Temperatur im Reaktor erreicht. Mit dem Energiebedarf der nachgeschalteten Ammoniakspaltung wird die Temperatur abgesenkt. Je höher das Kreislaufverhältnis gewählt wird, umso geringer fällt die Temperaturüberhöhung nach der Oxidationszone gegenüber der Temperatur am Reaktorausgang aus. Der Temperaturverlauf über der Reaktorlänge fällt damit umso gleichmässiger aus, je höher das Kreislaufverhältnis gewählt wird. Da die Oxidation von Wasserstoff mit einer höheren Geschwindigkeit abläuft als die Ammoniakspaltung, ist auch für den Fall dass Oxidationskatalysator und Spaltkatalysator gemischt werden, mit einer Temperaturspitze direkt nach der Oxidation zu rechnen, so dass sich die Wahl eines ausreichend hohen Kreislaufverhältnis empfiehlt. Mit unendlich hohem Kreislaufverhältnis ergibt sich eine konstante Temperatur längs des Reaktors entsprechend der adiabatischen Endtemperatur zu der dann erfolgten Umsetzung.

Ein zu großes Kreislaufverhältnis sollte, auch wenn es wegen der Temperaturführung anzustreben ist, ebenfalls vermieden werden, da es hohe Druckverluste in der Katalysatorfüllung zur Folge hat. Weiterhin behindern zu hohe Strömungsgeschwindigkeiten im Katalysator den vollständigen Umsatz zu den gewünschten Produkten. Geeignete Kreislaufverhältnisse liegen z.B. in der Größenordnung von 1 - 50. Zur Vermeidung hoher Druckverluste wird ein monolithischer Katalysator wie z.B. bei der Autoabgasreinigung üblich verwendet.

### Der beschriebene Prozess hat folgende Vorteile:

Die Mischung von Frischgas und rückgeführtem Gas erfolgt in sehr kurzer Zeit ebenso wie die partielle Oxidation des Wasserstoffs. Bei entsprechend hohen Temperaturen erfolgt die Ammoniakspaltung im Spaltkatalysator ebenfalls mit sehr hoher Reaktionsgeschwindigkeit. Da keine weiteren Wärmetauscherflächen benötigt werden, kann ein sehr kompakter Aufbau der Anordnung erfolgen, was insbesondere bei mobilen Anwendungen von Vorteil sein kann.

Das Oxidationsmittel, z.B. Luft, wird in einer derartigen Menge zugeführt, dass bei einer teilweisen Verbrennung des Ammoniaks bzw. des daraus gebildeten Wasserstoffs eine adiabatische Endtemperatur erreicht wird, bei der am Spaltkatalysator die Ammoniakspaltung mit ausreichender Geschwindigkeit abläuft. Eine unnötig hohe Zudosierung des Oxidationsmittels führt zu überhohen Temperaturen am Katalysator sowie zur Verringerung des Wasserstoffgehaltes im Produktgasstrom.

Bei der Verwendung von Luft als Oxidationsmittel wird Ammoniak und Luft zweckmäßigerweise im Molverhältnis der Größenordnung von 1 : 1 bis 1 : 1,5 zugeführt. Für ein Verhältnis von 1 : 1,19 sei beispielhaft folgende Gesamtreaktionsgleichung angeführt:

NH3 + 0,25 02 + 0,94 N2 → 0,5 H2O + H2 + 1,44 N2

Auf diese Weise kann ein Produktgas mit einem Anteil von ca. 30 % oder mehr an Wasserstoff erhalten werden. Bei diesem Wasserstoffanteil ist das Produktgas leicht brennbar und kann als Brennstoff z.B. in einem Heizkessel genutzt werden. Die hohe Temperatur des Produktgases verbessert die Brennbarkeit zusätzlich. Eine vollständige Umsetzung des Ammoniaks ist nicht unbedingt erforderlich, da nicht umgesetztes Ammoniak bei der Verbrennung des Produktgasstroms mit oxidiert wird, sofern dieser Ammoniakanteil gewisse Grenzen nicht übersteigt. Bei entsprechender Isolation und geeignetem Aufbau der Anordnung kann ein hoher Wirkungsgrad bezogen auf den Heizwert des eingesetzten Ammoniaks erzielt werden.

Das beschriebene Verfahren kann ebenfalls zur Befeuerung einer Gasturbine genutzt werden. Hierzu kann der wasserstoffhaltige Brennstoff bei niedrigem Druck, also einem Druck unterhalb des Brennkammerdrucks der Gasturbine, z. B. bei Atmosphärendruck, hergestellt und nach Kompression der Brennkammer zugeführt werden. Weiterhin kann aber auch ein Teilstrom der komprimierten Luft nach dem Verdichter der Turbine als bereits vorbeheiztes, unter Brennkammerdruck stehendes Oxidationsmittel verwendet werden. Nach Durchlauf des Kreislaufreaktors wird das Produktgas der Brennkammer der Gasturbine zugeführt. Durch die bereits erfolgte Vorwärmung wird weniger Oxidationsmittel benötigt und der Wasserstoffgehalt im Produktgasstrom steigt an.

Bei anderen Anwendungen, z.B. bei einer Verwendung des Produktgases in einem Hubkolbenmotor, erweist sich die hohe Temperatur des Produktgases als störend. Dann empfiehlt sich eine Prozessführung entsprechend FIG 2. In diesem Fall wird über einen Wärmetauscher dem Produktgasstrom ein Teil der Wärme entzogen und damit die Eingangsgasströme bestehend aus Ammoniak und Luft vorgeheizt. Wegen der Vorheizung wird weniger Oxidationsmittel benötigt, so dass auch in diesem Fall die Wasserstoffkonzentration im Produktgasstrom oberhalb der Wasserstoffkonzentration liegt, die bei dem Verfahren ohne Wärmetauscher nach FIG 1 erhalten wird.

### Kurze Beschreibung der Zeichnungen

Fig. 1 zeigt ein verfahrenstechnisches Fließbild für den vorgesehenen Prozess zur Ammoniakspaltung in einem Kreislaufreaktor
Fig. 2 zeigt das Fließbild entsprechend Fig. 1, bei dem jedoch über einen Wärmetauscher die Eingangsströme unter Abkühlung der heißen Endprodukte vorgeheizt werden.
Fig. 3 stellt ein Ausführungsbeispiel in Form eines Rohrreaktors mit Kreislaufpumpe und innerer Rückvermischung dar.

### Detaillierte Beschreibung der Erfindung - Ausführungsbeispiel

FIG 3 zeigt als Beispiel die praktische Ausführung eines Kreislaufreaktors entsprechend FIG1. Zu beachten ist, dass die Kreislaufpumpe bei hohen Temperaturen arbeiten muss.

Der Katalysator besteht aus einem monolithischen Träger entsprechend der Verwendung als Autoabgaskatalysator mit einer Zelldichte von 400/Inch² und einer Länge von 10 cm. Der Durchmesser beträgt 76 mm. Der Katalysator ist zur Hälfte mit Platin entsprechend einem Autoabgaskatalysator beschichtet. Dieser Teil stellt den Oxidationskatalysator dar. Die stromabwärts liegende Hälfte ist mit Eisen und geringen Mengen Kalium als Promotor beschichtet. Dieser Teil stellt den Spaltkatalysator dar. Der Aufbau erfüllt die Anforderung des geringen Druckverlustes. Der Katalysator ist in einem Edelstahlrohr mit 80 mm Außendurchmesser eingebaut. Dieses innere Edelstahlrohr ist in ein äußeres Edelstahlrohr mit 104 mm Innendurchmesser eingebaut, so dass ein Ringspalt von 12 mm zwischen Innen- und Außenrohr verbleibt. Am Eingang des Innenrohres befindet sich die Kreislaufpumpe in Form eines Turbinenrades aus Edelstahl, welches das Gas durch den Katalysator drückt. Die Rückströmung des Gases erfolgt über den Ringspalt. Die Turbine wird über einen Gleichstromelektromotor (12 V, 100 Watt max., Drehzahl 9.000/min maximal) angetrieben und besteht ebenso wie die Antriebswelle aus Edelstahl.

Der Gasraum um den Elektromotor wird über die Wellendurchführungen (Spalt ca. 1 mm, dreifache Durchführung) von dem heißen Reaktorraum getrennt. Die Luft wird auf der Seite des Elektromotors zugeführt und strömt über die Wellendurchführungen in den Reaktionsraum. Der Elektromotor und der von diesem abgehenden Teil der Welle wird dadurch bei niedrigen Temperaturen gehalten. Weiterhin kommt der Elektromotor nicht mit Ammoniak in Kontakt.

Um den Wärmetransport von der heißen Reaktionszone in Richtung Elektromotor zu verringern bzw. die Wärme noch teilweise zu nutzen, wird der Wellendurchgang dreifach realisiert und hinter der letzten Wellendurchführung auf Seite des Elektromotors noch eine Wasserkühlung angebracht. Das äußere Edelstahlrohr wird zusätzlich auf der heißen Seite zwischen rechter und mittlerer Wellendurchführung mit dem zugeführten Ammoniak gekühlt. Dazu wurde die Zuführungsleitung für das Ammoniak in einer Rohrspirale auf der Außenseite des äußeren Edelstahlrohres wie in FIG 3 angegeben, aufgelötet.

Das Produktgas wird auf der Abgangsseite des Katalysators entnommen. Zum Start der Reaktion wird der Reaktor auf Höhe des Katalysators elektrisch beheizt. Die Isolation des Reaktors besteht aus einer 5 cm dicken Schicht von Keramikfüllkörpern und außen anschließend aus einer 12 cm starken Dämmung aus Mineralwolle. Die Isolation ist in FIG 3 nicht eingezeichnet.

Der Betrieb des Reaktors wird beispielhaft anhand der nachfolgend genannten Prozessdaten dargestellt:

| | |
|---|---|
| Eingangsgasstrom: | 60 l/min NH3 |
| | 72 l/min Luft |

Zum Start des Reaktors wird dieser über die elektrische Zusatzheizung auf 400 - 500 °C vorgeheizt und anschließend mit einer Ammoniak-Luft-Mischung beaufschlagt, die gegenüber den o. g. Werten einen höheren Sauerstoffgehalt beinhaltet. Die Temperatur steigt daraufhin schnell an, so dass die Zusatzheizung abgeschaltet werden kann. Mit Änderung der Gasströme auf das o. g. Mischungsverhältnis stellt sich ein stationärer Betrieb mit einer Temperatur von ca. 750 °C am Reaktorausgang je nach Qualität der verwendeten Isolation ein. Die Temperatur kann durch entsprechende Änderung der Luftzufuhr bzw. des Verhältnisses zwischen Ammoniak und Luft nachgeregelt werden. Das Kreislaufverhältnis kann bei der verwendeten Anordnung nur abgeschätzt werden, liegt aber oberhalb von 3. Bei den vorgegebenen Volumenströmen ergibt sich der Gesamtumsatz im Reaktor etwa nach der folgenden Gleichung:

60 NH3 + 15 02 + 57 N2 → 30 H2O + 60 H2 + 87 N2

Das Produktgas wird bei Endtemperatur dem Kreislauf entnommen und enthält ca. 33 % Wasserstoff. Es kann direkt mit Luft verbrannt werden. Bezogen auf das eingesetzte Gas ergibt sich eine Belastung des Katalysators von ca. 15.000 / h. Bei vollständiger Verbrennung des Produktgasstromes wird bei den angegebenen Volumenströmen eine Wärmeleistung von ca. 13 kW freigesetzt, was z.B. zur Beheizung eines mäßig wärmegedämmten Ein- oder Zweifamilienhauses ausreicht. Die Anordnung kann als Vorsatzgerät für den Einsatz von Ammoniak zum Betrieb eines üblichen Heizkessels angesehen werden.

## Patentansprüche

1. Beansprucht wird ein Verfahren zur Umwandlung von Ammoniak in ein brennbares, wasserstoffhaltiges Gasgemisch **dadurch gekennzeichnet, dass**
- ein Reaktor mit einem zweistufigen Katalysator genutzt wird, der im Eingangsteil aus einem üblichen edelmetallhaltigen Oxidationskatalysator und im nachgeschalteten Teil aus einem üblichen Ammoniak-Spalt-Katalysator, wie z.B. Eisen, Nickel oder Ruthenium auf entsprechenden Trägermaterialien, besteht, so dass im ersten Teil hauptsächlich eine Oxidation von Ammoniak und Wasserstoff und im zweiten Teil hauptsächlich eine Spaltung von Ammoniak in Wasserstoff und Stickstoff erfolgt
- der den Katalysator enthaltene Reaktor als Kreislaufreaktor betrieben wird, so dass ein Teil des erhaltenen Produktstroms und damit ein Teil des durch Ammoniakspaltung erhaltenen Wasserstoffs mit oder ohne Zwischenkühlung über eine Pumpe zum Reaktoreingang zurückgeführt wird
- in diesen rückgeführten Gasstrom oder am Reaktoreingang die Ausgangsstoffe Ammoniak und Oxidationsmittel bzw. Luft derart dosiert werden, dass die durch die Oxidation im ersten Katalysatorteil erhaltene Energie ausreicht, um die nachfolgende Spaltung des Ammoniaks sicherzustellen und den Reaktor auf der erforderlichen Temperatur zu halten und
- der Produktstrom bestehend aus den Hauptkomponenten Wasserstoff, Wasserdampf und Stickstoff sowie aus evtl. nicht umgesetztem Ammoniak am Reaktorausgang entnommen wird.

2. Verfahren nach Anspruch 1, bei dem über einen Wärmetauscher die Eingangsgasströme unter Abkühlung des heißen Produktgasstroms vor Eintritt in den Kreislaufreaktor vorgeheizt werden.

3. Verfahren nach Anspruch 1 und 2, bei dem nicht nur 2 sondern mehrere sich abwechselnde Zonen des Katalysators, bestehend jeweils aus Oxidations- und Spaltkatalysator, eingebaut sind, oder Oxidations- und Spaltkatalysator vermischt oder die jeweils aktive Komponente wie Edelmetall und Eisen oder Nickel auf einem gemeinsamen Träger ohne örtliche Trennung aufgebracht sind.

4. Verfahren nach Anspruch 1, 2 und 3, bei dem als Oxidationsmittel nicht Luft, sondern ein Gas mit höherem Sauerstoffgehalt oder reiner Sauerstoff eingesetzt wird.

5. Verfahren nach Anspruch 1, 2, 3 und 4, bei dem der Reaktor bei einem erhöhten Druck von bis zu 50 bar betrieben wird.

6. Verfahren nach den Ansprüchen 1 bis 5, bei dem als Kreislaufpumpe eine Turbine in Form eines Radial- oder Axialgebläses oder eine Strahlpumpe eingesetzt wird, wobei im letzten Fall die Ausgangsstoffe Ammoniak und/oder Luft als Treibmittel für den Treibstrahl zum Einsatz kommen.

## Claims

1. Method for converting ammonia into a combustible, hydrogen-containing gas mixture, **characterized in that**
- use is made of a reactor with a two-stage catalyst which, in the inlet part, comprises a conventional noble-metal-containing oxidation catalyst and, in a downstream part, a conventional ammonia cracking catalyst, such as iron, nickel or ruthenium on appropriate carrier materials, so that oxidation of ammonia and hydrogen is primarily carried out in the first part and cracking of ammonia into hydrogen and nitrogen is primarily carried out in the second part,
- the reactor containing the catalyst is operated as a recirculation reactor, so that part of the product stream obtained and therefore part of the hydrogen obtained by ammonia cracking is fed back via a pump to the reactor inlet, with or without intermediate cooling,
- the initial materials ammonia and oxidising agent or air are metered into in this recycled gas stream or at the reactor inlet in such a way that the energy obtained by the oxidation in the first catalyst part is sufficient to ensure the subsequent cracking of the ammonia and to keep the reactor at the requisite temperature, and
- the product stream composed of the main components hydrogen, water vapour and nitrogen and possibly unconverted ammonia is removed at the reactor outlet.

2. Method according to Claim 1, in which the input gas streams are pre-heated via a heat exchanger before entry into the recirculation reactor, cooling the hot product gas stream.

3. Method according to Claims 1 and 2, in which not just two but a plurality of alternating zones of the catalyst, each comprising oxidation and cracking catalyst, are installed, or oxidation and cracking catalyst are mixed or the respectively active components such as noble metal and iron or nickel are applied to a common carrier without local separation.

4. Method according to Claims 1, 2 and 3, in which the oxidising agent used is not air but a gas with a higher oxygen content or pure oxygen.

5. Method according to Claims 1, 2, 3 and 4, in which the reactor is operated at an elevated pressure of up to 50 bar.

6. Method according to Claims 1 to 5, in which the circulation pump used is a turbine in the form of a radial or axial blower or a jet pump, in the last case the initial materials ammonia and/or air being used as propellant for the propellant jet.

## Revendications

1. - Procédé de conversion d'ammoniac en un mélange gazeux à teneur en hydrogène, combustible, **caractérisé par le fait que**
- un réacteur est utilisé avec un catalyseur à deux étages, qui est composé, dans la partie d'entrée, d'un catalyseur d'oxydation usuel, à teneur en métal noble, et, dans la partie en aval, d'un catalyseur usuel de craquage d'ammoniac, comme, par exemple, le fer, le nickel ou le ruthénium sur des matières de support correspondantes, de telle sorte que, dans la première partie, a lieu principalement une oxydation d'ammoniac et d'hydrogène et, dans la seconde partie, a lieu principalement un craquage d'ammoniac en hydrogène et azote ;
- le réacteur contenant le catalyseur est actionné en tant que réacteur à boucle, de telle sorte qu'une partie du courant de produit obtenu et par conséquent une partie de l'hydrogène obtenu par craquage d'ammoniac est recyclée à l'entrée de réacteur par une pompe avec ou sans refroidissement intermédiaire ;
- dans ce courant de gaz recyclé ou à l'entrée du réacteur, les matières de départ ammoniac et agent d'oxydation ou air sont dosées de telle sorte que l'énergie produite par l'oxydation dans la première partie de catalyseur suffit pour garantir le craquage ultérieur de l'ammoniac et pour maintenir le réacteur à la température nécessaire ; et
- le courant de produit composé des composants principaux hydrogène, vapeur d'eau et azote ainsi qu'éventuellement ammoniac n'ayant pas réagi est prélevé sur la sortie du réacteur.

2. - Procédé selon la revendication 1, dans lequel les courants de gaz d'entrée sont préchauffés sous refroidissement du courant de gaz produit chaud avant l'entrée dans le réacteur à boucle par l'intermédiaire d'un échangeur de chaleur.

3. - Procédé selon l'une des revendications 1 ou 2, dans lequel non seulement 2 mais encore plusieurs zones alternées du catalyseur, se composant chacune d'un catalyseur d'oxydation et de craquage, sont installées, ou un catalyseur d'oxydation et un catalyseur de craquage sont mélangés ou les composants actifs respectifs comme le métal noble et le fer ou le nickel sont appliqués sur un support commun sans séparation locale.

4. - Procédé selon l'une des revendications 1, 2 ou 3, dans lequel non pas de l'air, mais un gaz ayant une teneur en oxygène supérieure ou de l'oxygène pur est utilisé comme agent d'oxydation.

5. - Procédé selon l'une des revendications 1, 2, 3 et 4, dans lequel le réacteur est actionné avec une pression élevée allant jusqu'à 50 bar.

6. - Procédé selon l'une des revendications 1 à 5, dans lequel, comme pompe de recyclage, est utilisée une turbine sous forme d'un ventilateur radial ou axial ou une pompe à jet, où, dans le dernier cas, les matières de départ ammoniac et/ou air sont utilisés en tant qu'agent propulseur pour le jet de propulsion.
